# FASCICULE DE BREVET EUROPEEN

(11) **EP 1 264 288 B1**
(45) Date de publication et mention de la délivrance du brevet: **06.06.2007**
(21) Numéro de dépôt: 01904044.3
(22) Date de dépôt: 02.02.2001
(51) Int. Cl.: G07F 7/10

(54) **GESTION DE TEMPS AU NIVEAU COMMUNICATION POUR ENTITE DU TYPE CARTE A PUCE**
KOMMUNIKATIONSZEITPLANVERFAHREN FÜR CHIPKARTE
TIME MANAGEMENT AT COMMUNICATION LEVEL FOR A SMART CARD-TYPE ENTITY

(30) Priorité: 03.02.2000 FR 0001508
(43) Date de publication de la demande: 11.12.2002
(73) Titulaire: GEMPLUS, 13420 Gémenos (FR)
(72) Inventeur: GUTERMAN, Pascal, 13360 Roquevaire (FR); BONNET, Laurent, F-13510 Aiguilles (FR)
(86) Numéro de dépôt international: PCT/FR2001/000327
(87) Numéro de publication internationale: WO 2001/057810

(56) Documents cités:
- WO-A-98/19237
- WO-A-98/52160
- JEAN-JACQUES VANDEWALLE ET AL: "Developing Smart Card-Based Application using Java Card" -, août 1998 (1998-08), XP002135233

## Description

La présente invention concerne des contraintes temporelles dans des protocoles de communication de la couche application utilisée dans des entités du type carte à puce (smart card), dite également carte à circuit intégré ou à microprocesseur. Elle a trait particulièrement à des protocoles de communication où des contraintes de mesure de durée sont sévères, par exemple pour des protocoles de communication dédiés à des cartes avec ou sans contact, et sont difficiles à prendre en compte, par exemple pour des systèmes d'exploitation ouverts.

La plupart des cartes à puce, telles qu'une carte de crédit ou une carte d'abonné téléphonique SIM (Subscriber Identity Module), échangent avec des terminaux, tels que des lecteurs ou postes radiotéléphoniques mobiles, auxquels les cartes sont électriquement connectées en fonctionnement, des données selon des protocoles de communication dédiés selon la norme ISO 7816-3.

Selon cette norme, au cours d'un processus d'échanges de blocs de données (I-block) selon le protocole de transmission asynchrone par bloc T=1 au niveau de la couche application, la durée entre le front avant du dernier caractère d'un premier bloc reçu par la carte et le front avant du premier caractère d'un deuxième bloc de données émis par la carte ne peut excéder une durée maximale prédéterminée BWT (Block Waiting Time). Si au cours du déroulement du processus applicatif, la couche application de la carte sait que le traitement du premier bloc dépassera la durée maximale prédéterminée et doit donc mettre "en attente" le terminal, la couche application émet une requête de protocole spécifique appelée "prolongation de durée d'attente" WTX (Waiting Time extension) avant l'expiration de la durée maximale BWT. Le champ d'information de la requête WTX contient un multiple entier de la durée maximale BWT, définissant un temps alloué à la couche application de la carte qui débute après la réception d'un accusé de réception transmis par le terminal en réponse à la requête.

Si à la suite d'un premier bloc la carte ne renvoie pas un autre bloc normalement avant l'expiration de la durée BWT, ou à la demande, avant l'expiration du temps alloué, le terminal interprète cette absence de bloc comme un dépassement de durée (time-out) et par exemple renvoie le premier bloc.

Toutefois, au niveau applicatif, les logiciels de carte à puce sont d'abord conçus indépendamment d'une quelconque notion de durée relative aux échanges d'information.

D'une part, l'application n'est pas destinée à compter le temps puisque les performances en durée sont dépendantes du système d'exploitation, particulièrement des caractéristiques du microprocesseur, des routines du système, etc. Ce problème est très difficile à résoudre dans les systèmes d'exploitation ouverts tels que JavaCard, où l'application, telle qu'un applet, est supposée être une plate-forme indépendante.

D'autre part, il n'est pas souhaitable que les sous-programmes de plus bas niveau (kernel) soient responsables de la délivrance de ces requêtes puisqu'ils sont complètement déconnectés des aspects temporels.

Ainsi, certains protocoles de communication sont très restrictifs en terme de gestion de durée, puisque les valeurs de durée sont directement liées à l'efficacité du protocole, par exemple des protocoles pour carte dédiés sans contact.

Deux types de gestion des requêtes de prolongation de durée d'attente WTX sont connues selon la technique antérieure pour résoudre ce problème.

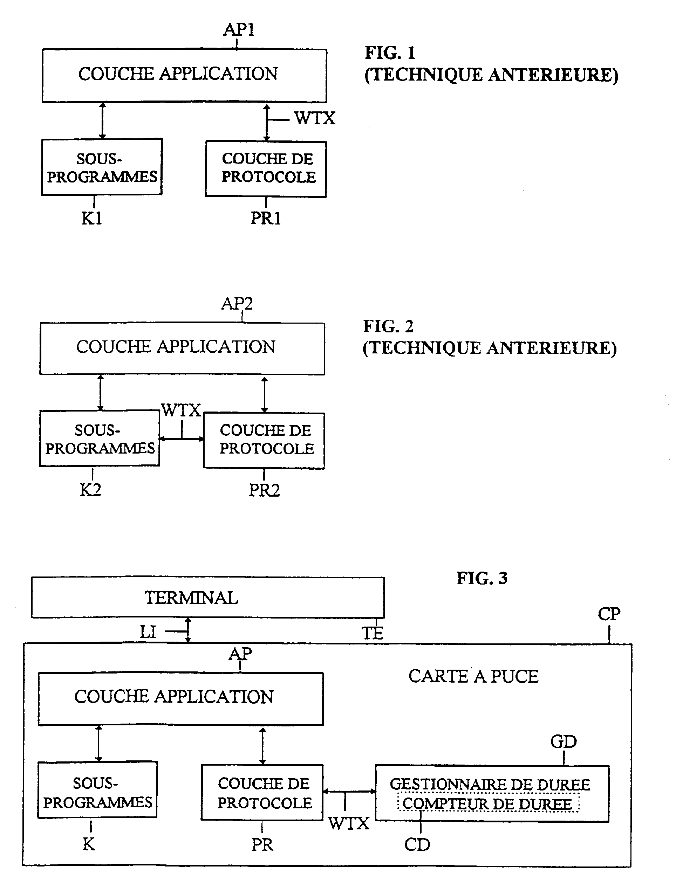

Dans un premier type, comme montré à la figure 1, les requêtes de prolongation de durée d'attente WTX fournies par la couche de protocole PR1 sous-jacente à la couche application AP1 dans la carte sont gérées par la couche application AP1 elle-même. Cette architecture logicielle n'est pas portable, c'est-à-dire les durées sont dépendantes des sous-programmes K1 (kernel), présente un comptage de durée empirique, n'est pas applicable lorsque l'application appelle un service présentant un long processus de traitement, par exemple un algorithme de cryptographie complexe, ne prend pas en compte des paramètres spécifiques tels que les durées de temps d'attente, et est très restrictive pour l'application pendant des durées d'attente courtes, par exemple relatives à des protocoles dédiés sans contact.

Selon un deuxième type, les requêtes de prolongation de durée d'attente WTX sont fournies par la couche de protocole PR2 aux sous-programmes (kernel) K2 qui les gèrent, comme montré à la figure 2. Cette deuxième architecture logicielle connue est avantageuse en ce que l'application est déchargée de la gestion des requêtes WTX ce qui est impératif dans les systèmes d'exploitation ouverts puisque les fonctions de l'application sont indépendantes des fonctions des applications avec au moins une entité externe. En outre, l'architecture logicielle facilite la réalisation d'un long processus en insérant plusieurs appels avec des requêtes WTX pendant le processus.

Cependant, cette deuxième architecture logicielle n'est ni rigoureuse ni exhaustive en raison des difficultés à considérer chaque séquence d'appels par des sous-programmes, ne prend pas en compte des paramètres spécifiques de protocole, tels que des durées d'attente, et peut avoir une répercussion sur chaque sous-programme.

L'invention vise à améliorer la gestion du temps dans l'architecture logicielle au niveau applicatif selon le premier type dans une carte à puce, en libérant la couche application de cette contrainte temporelle.

A cette fin, une entité de type carte à puce comportant une couche application liée à une couche de protocole de communication, est caractérisée en ce qu'elle comprend un gestionnaire de durée s'interfaçant avec la couche de protocole pour établir sensiblement périodiquement, à l'expiration d'une durée d'attente, une requête de prolongation de durée d'attente transmise à un terminal à travers la couche de protocole tant que des données sont en cours de traitement dans la couche application.

Le gestionnaire de durée comprend en pratique un moyen de comptage de durée qui est activé après la réception d'une commande sans ou avec des données transmise par le terminal ou après une réponse avec des données transmise par l'entité, qui est désactivé en attente d'une commande avec des données par la couche application ou sensiblement lors de la transmission d'une réponse sans ou avec des données au terminal, et qui est désactivé puis ré-activé sensiblement à l'expiration de chaque durée d'attente provoquant la transmission de la requête de prolongation au terminal. Le moyen de comptage de durée est par exemple intégré dans le microprocesseur d'une carte à puce qui est ainsi distinct de la couche de protocole et de l'ensemble des sous-programmes.

L'architecture logicielle au niveau applicatif selon l'invention assure que le comptage de durée n'est pas effectué comme une tâche de base dans la couche application et n'interagit pas avec des durées imposées par l'unité centrale (CPU) de l'entité, telle que microprocesseur. La couche application ne considère pas la durée de traitement d'un bloc de données et repose sur la couche de protocole pour la gestion de cette durée avec le terminal, en mettant en attente le terminal. Un programme est ainsi élaboré dans la couche application sans se soucier de la durée du traitement relative à ce programme.

L'invention concerne également un procédé de gestion de temps au niveau de la couche application liée à une couche de protocole de communication dans une entité de type à carte à puce; caractérisé en ce qu'il comprend les étapes suivantes :
- fournir un gestionnaire de durée s'interfaçant avec la couche de protocole liée à la couche application,
- activer par la couche de protocole le gestionnaire en réponse à une commande sans ou avec des données transmises par un terminal ou après une réponse avec des données transmise par l'entité du terminal, de manière à établir sensiblement périodiquement des requêtes de prolongation de durée d'attente transmises par la couche de protocole au terminal, et
- désactiver le gestionnaire lorsque la couche de protocole attend une commande avec des données ou sensiblement lorsque la couche de protocole transmet une réponse sans ou avec des données.

De préférence, l'étape d'activer comprend les étapes périodiques suivantes :
décompter une durée d'attente par le moyen de comptage de durée inclus dans le gestionnaire activé,
désactiver le moyen de comptage et établir par le gestionnaire une requête de prolongation de durée d'attente sensiblement à l'expiration d'une durée d'attente, et
transmettre la requête de prolongation par la couche de protocole au terminal, et
activer le moyen de comptage.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 représente schématiquement l'architecture modulaire logicielle au niveau de la couche application dans une carte à puce selon un premier type de la technique antérieure déjà commenté
- la figure 2 représente schématiquement l'architecture modulaire logicielle au niveau de la couche application dans une carte à puce selon un deuxième type de la technique antérieure déjà commenté ;
- la figure 3 représente schématiquement l'architecture modulaire logicielle au niveau de la couche application dans une carte à puce selon l'invention ; et
- la figure 4 est un algorithme de gestion de temps entre la couche de protocole et un gestionnaire de durée dans l'architecture logicielle selon l'invention.

Dans la figure 3, on retrouve dans une carte à puce CP l'architecture logicielle d'un système d'exploitation selon le premier type montré à la figure 1, au niveau de la couche application AP reliée à une couche sous-jacente pour protocole de communication PR et à des sous-programmes et outils de programmation de plus bas niveau (kernel) K. La carte à puce est reliée à un terminal TE, tel qu'un lecteur de carte ou un terminal radiotéléphonique mobile, par une liaison à l'alternat LI avec ou sans contacts électriques.

Selon l'invention, un gestionnaire de durée GD est interfacé directement à la couche de protocole PR de manière à y contrôler des requêtes de prolongation de temps d'attente WTX (Waiting Time extension). Le gestionnaire de durée utilise une ressource de comptage de durée dédiée, par exemple un compteur de durée CD cadencé par des impulsions d'horloge et implémenté matériellement dans ou en liaison avec le microprocesseur de la carte à puce. La couche de protocole de communication gère des échanges de commandes et réponses avec la couche de protocole d'une autre entité, telle que le terminal TE. Le protocole de communication est par exemple le protocole de communication asynchrone à l'alternat de blocs "T=1" selon la norme ISO 7816-3.

L'architecture logicielle selon l'invention implique une conception de logiciel spécifique afin de synchroniser les requêtes avec les primitives de commande de protocole émises automatiquement et ainsi éviter des conflits de protocole. En effet, lors du déclenchement d'un processus de traitement de données, d'une part la couche application AP ne gère pas le temps de traitement entre la réception de données et l'émission de nouvelles données et s'appuie en permanence sur des primitives de la couche de protocole sous-jacente PR. D'autre part, la couche de protocole PR surveillant elle-même, selon l'invention, les durées de traitement de données dans la couche application qui ignore ces durées, doit contrôler l'établissement et la transmission des requêtes WTX sans perturber le protocole de communication.

L'interfaçage entre le gestionnaire de durée GD et la couche de protocole PR entraîne certaines modifications dans la couche de protocole, comparativement à la technique antérieure.

La couche de protocole PR fournit au gestionnaire de durée GD des paramètres de protocole relatifs notamment aux durées d'attente, comme la durée maximale BWT entre une commande sans ou avec un champ de données (séquence d'octets) reçue dans la carte, en tant qu'une unité de données de protocole, et une réponse sans ou avec un champ de données à émettre par la carte. Le compteur de durée (timer) CD inclus dans le gestionnaire GD est initialisé avec ces paramètres fournis par la couche de protocole PR.

En dépendance du déroulement du protocole de communication, la couche de protocole PR contrôle l'activation du compteur de durée CD et donc l'établissement des requêtes WTX par le gestionnaire de durée GD ce qui évite des conflits de protocole. Ainsi, un décomptage, ou bien un comptage, d'un nombre prédéterminé d'impulsions d'horloge dans le compteur de durée CD provoque la production d'une requête WTX en appelant un service de communication concerné dans la couche de protocole PR sans que celle-ci connaisse précisément le temps de traitement demandé par la couche application.

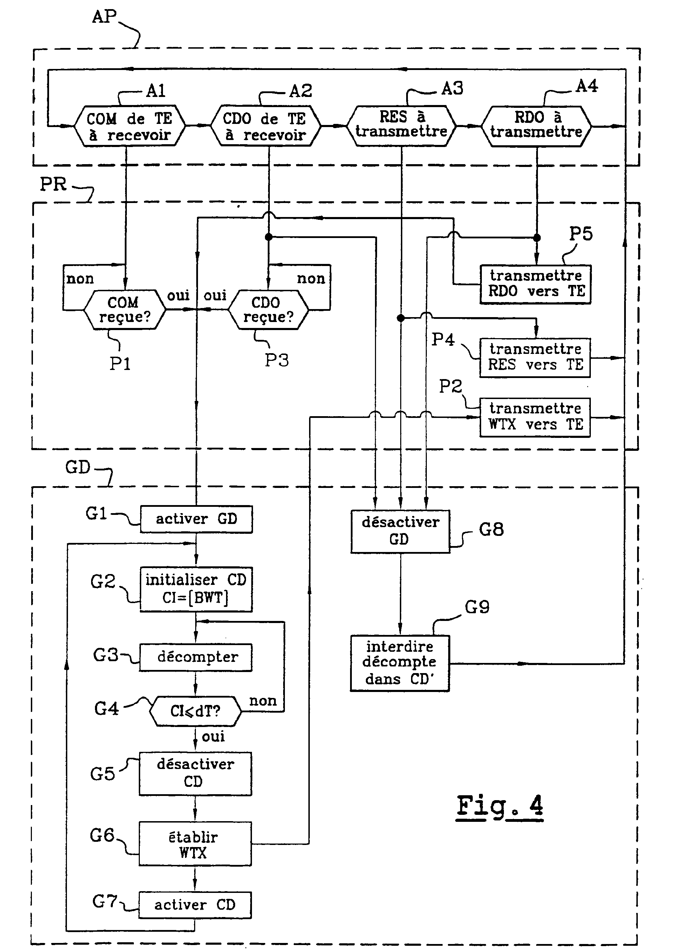

En référence à un exemple de procédé de gestion de temps illustré à la figure 4, est présenté pour quatre types principaux d'unités de données de protocole APDU traitées et établies par la couche application AP, à savoir des commandes sans données COM et des commandes avec données CDO transmises par le terminal TE vers la carte CP à travers la liaison LI, et des réponses sans données RES et des réponses avec données RDO transmises par la carte CP vers le terminal TE à travers la liaison LI. Ainsi, le procédé de gestion de temps au niveau de la couche application AP comprend quatre étapes A1 à A4 relatives à ces quatre types d'unité de protocole COM, CDO, RES et RDO ; chacune des quatre unités de protocole déclenche des interactions entre la couche de protocole PR et le gestionnaire de durée GD, après une initialisation. Au cours de celle-ci, les paramètres de protocole précités relatifs notamment aux données d'attente et définis dans la couche de protocole PR sont transmis au gestionnaire GD pour régler en conséquence le compteur de durée CD.

La succession cyclique des étapes A1 à A4 dans la couche application AP assure qu'il n'y a pas de conflit entre des unités de protocole notamment à transmettre et à recevoir.

En outre, la couche application AP a des fonctionnalités totalement indépendantes du cycle des étapes dans le gestionnaire de durée GD décrites ultérieurement.

Lorsqu'une commande COM sans données est à recevoir dans la couche application (étape A1), la couche de protocole PR surveille et gère la réception de la commande à une étape P1.

Si une commande COM est détectée, la couche de protocole PR invoque une méthode d'activation du gestionnaire de durée GD à une étape G1. Dans le gestionnaire de durée, l'étape d'activer G1 initialise le compteur de durée CD à une étape G2, par exemple en mettant le compte CI de celui-ci égal à un nombre représentatif [BWT] de la durée maximale BWT entre une unité de protocole reçue, telle que la commande COM, et une unité de protocole émise par la carte à puce CP.

Puis, un décomptage d'impulsions d'horloge est déclenché à une étape G3. Cycliquement à une étape intermédiaire G4 en réponse à chaque impulsion d'horloge, le gestionnaire GD compare le compte CI du compteur CD à un paramètre dT, tel que dT << [BWT], définissant une durée, petite comparativement à la durée maximale BWT, pour transmettre une requête WTX. Ainsi, tant que le compte CI est supérieur à dT à l'étape G4, le décompte des impulsions d'horloge est poursuivi. Comme on le verra dans la suite à propos des étapes A3 et A4, le décompte est poursuivi tant que la couche application AP n'a pas produit une réponse RES ou RDO à la commande COM.

Si le compte CI atteint dT à l'étape G4, le compteur CD est désactivé à l'étape G5. Le gestionnaire GD établit alors à l'étape suivante G6 une requête de prolongation de temps d'attente WTX appliquée à la couche de protocole PR, et active de nouveau à une étape G7 le compteur CD dont le compte est remis à CI = [BWT] à l'étape G2 qui se poursuit par des cycles d'étapes G3 et G4. Après avoir établi et transmis la requête WTX au terminal TE à une étape P2, la couche de protocole PR le signale à la couche application AP qui maintiendra le cycle de génération de requête WTX G2 à G7 tant qu'une réponse n'est pas à transmettre.

Lorsqu'une commande CDO avec données est à recevoir dans la couche application (étape A2), la couche de protocole PR invoque une méthode de désactivation du gestionnaire GD à une étape G8 afin que le gestionnaire GD arrête et interdise ainsi tout décompte dans le compteur CD à une étape G9, le compteur CD pouvant être en cours de décomptage à la suite d'une réponse de données RDO transmises. La couche de protocole PR surveille et gère également la réception d'une commande CDO à l'étape P3.

Si une commande CDO est détectée à l'étape P3, la couche de protocole PR invoque une méthode d'activation du gestionnaire de durée GD à une étape identique à l'étape G1 ce qui initialise le compteur de durée CD à l'étape G2 et déclenche les étapes déjà décrites G2 à G7 dans le gestionnaire GD, avec éventuellement la transmission d'une requête établie WTX à l'étape P2, tant qu'une réponse RES ou RDO n'est pas produite ce qui interromprait le décomptage dans le compteur CD.

Lorsqu'une réponse sans données RES est à transmettre par la couche application (étape A3), la couche de protocole PR invoque une méthode de désactivation du gestionnaire GD à l'étape G8 ce qui arrête le compteur à l'étape G9, puisque le compteur CD a été déclenché à la réception d'une commande COM ou CDO et maintenu à l'état de décomptage cyclique tant que la couche application n'a pas terminé le traitement généré par cette dernière commande. Sensiblement simultanément, la couche de protocole PR transmet la réponse RES en l'encapsulant à une étape P4.

De même, lorsqu'une réponse avec données RDO est à transmettre par la couche application (étape A4), la couche de protocole PR invoque sensiblement simultanément la méthode de désactivation du gestionnaire GD aux étapes G8 et G9 et transmet la réponse RDO encapsulée par la couche de protocole PR à une étape P5.

Cependant, l'étape P5 est suivie de l'étape G1 au cours de laquelle la couche de protocole PR invoque une méthode d'activation du gestionnaire de durée GD selon les étapes G2 à G7. En effet, la réponse RDO avec données n'est pas obligatoirement la fin d'un traitement dans la couche application qui peut avoir besoin encore de prolongation de temps en transmettant une ou plusieurs requêtes WTX pour poursuivre ledit traitement en attendant des données transmises par le terminal par au moins une commande CDO avec données, tant qu'une réponse "définitive" RES n'est pas transmise.

## Revendications

1. - Entité de type carte à puce (CP) comportant une couche application (AP) liée à une couche de protocole de communication (PR), **caractérisée en ce qu'**elle comprend un gestionnaire de durée (GD) s'interfaçant avec la couche de protocole (PR) pour établir sensiblement périodiquement, à l'expiration d'une durée d'attente (BWT), une requête de prolongation de durée d'attente (WTX) transmise à un terminal (TE) à travers la couche de protocole tant que des données sont en cours de traitement dans la couche application.

2. - Entité conforme à la revendication 1, dans laquelle le gestionnaire de durée (GD) comprend un moyen de comptage de durée (CD) qui est activé (G1) après la réception d'une commande sans ou avec des données (COM, CDO) transmise par le terminal (TE) ou après une réponse avec des données (RDO) transmise par l'entité, qui est désactivé (G8) en attente d'une commande avec des données (CDO) par la couche application (AP) ou sensiblement lors de la transmission d'une réponse sans ou avec des données (RES, RDO) au terminal, et qui est désactivé puis ré-activé (G5-G7) sensiblement à l'expiration de chaque durée d'attente (BWT) provoquant la transmission de la requête de prolongation (WTX) au terminal (TE).

3. - Procédé de gestion de temps au niveau d'une couche application (AP) liée à une couche de protocole de communication (PR) dans une entité de type à carte à puce (CP) conforme à la revendication 1 ou 2, **caractérisé en ce qu'**il comprend les étapes suivantes :
- fournir un gestionnaire de durée (GD) s'interfaçant avec la couche de protocole (PR) liée à la couche application,
- activer (G1) par la couche de protocole le gestionnaire (GD) en réponse (P1, P3) à une commande sans ou avec des données transmises par un terminal (TE) ou après une réponse avec des données transmise (P5) par l'entité au terminal, de manière à établir sensiblement périodiquement des requêtes de prolongation de durée d'attente (WTX) transmises par la couche de protocole (PR) au terminal (TE), et
- désactiver (G8) le gestionnaire (GD) lorsque la couche de protocole attend (P3) une commande avec des données ou sensiblement lorsque la couche de protocole transmet (P4, P5) une réponse sans ou avec des données.

4. - Procédé conforme à la revendication 3, selon lequel l'étape d'activer comprend les étapes périodiques suivantes :
décompter (G3, G4) une durée d'attente (BWT) par le moyen de comptage de durée (CD) inclus dans le gestionnaire (GD) activé,
désactiver (G5) le moyen de comptage et établir (G6) par le gestionnaire une requête de prolongation de durée d'attente (WTX) sensiblement à l'expiration d'une durée d'attente (BWT), et
transmettre (P2) la requête de prolongation (WTX) par la couche de protocole au terminal (TE), et
activer (G7) le moyen de comptage.

## Claims

1. Entity such as a smart card (CP) comprising an application layer (AP) linked to a communication protocol layer (PR), **characterised in that** it comprises a time handler (GD) interfacing with the protocol layer to generate, substantially periodically at the expiry of a waiting time (BWT), a waiting time extension (WTX) request transmitted to a terminal (TE) over the protocol layer while data are being processed in the application layer.

2. Entity according to claim 1, wherein the time handler (GD) comprises timer means (CD) which are activated after receiving a command with or without data (COM, CDO) transmitted by the terminal (TE) or after a response with data (RDO) transmitted by the entity, which is deactivated (G8) waiting for a command with data (CDO) by the application layer (AP) or substantially during the transmission of a response with or without data (RES, RDO) to the terminal, and which is deactivated and then reactivated (G5-G7) substantially upon the expiry of each waiting time (BWT) causing the extension request (WTX) to be transmitted to the terminal (TE).

3. Method of managing time in an application layer (AP) linked to a communication protocol layer (PR) in an entity such as a smart card (CP) according to claim 1 or 2, **characterised in that** it comprises the following steps:
- supplying a time handler (GD) that interfaces with the protocol layer (PR) connected to the application layer,
- the protocol layer activating (G1) the handler (GD) in response (P1, P3) to a command with or without data transmitted by a terminal (TE) or after a response with data transmitted (P5) by the entity to the terminal, so as substantially periodically to generate waiting time extension (WTX) requests transmitted by the protocol layer (PR) to the terminal (TE), and
- deactivating (G8) the handler (GD) when the protocol layer is waiting (P3) for a command with data or substantially when the protocol layer transmits (P4, P5) a response with or without data.

4. Method according to claim 3, wherein the activation step comprises the following periodic steps:
the timer means (CD) included in the activated handler (GD) counting down (G3, G4) a waiting time (BWT),
deactivating (G5) the timer means and the handler generating (G6) a waiting time extension (WTX) request substantially at the end of a waiting time (BWT), and
the protocol layer transmitting (P2) the extension request (WTX) to the terminal (TE), and
activating (G7) the timer means.

## Patentansprüche

1. Einheit von der Art Chipkarte (CP), die eine Anwendungsschicht (AP) umfaßt, die mit einer Kommunikations-Protokollschicht (PR) verbunden ist, **dadurch gekennzeichnet, daß** sie einen Zeitdauer-Manager (GD) umfaßt, der eine Schnittstelle mit der Protokollschicht (PR) bildet, um deutlich periodisch bei Ablauf einer Wartezeit (BWT) eine Anfrage auf Verlängerung der Wartezeit (WTX) zu erstellen, die durch die Protokollschicht an ein Terminal (TE) übermittelt wird, solange die Verarbeitung der Daten in der Anwendungsschicht läuft.

2. Einheit nach Anspruch 1, **dadurch gekennzeichnet, daß** der Zeitdauer-Manager (GD) ein Mittel zur Zeitzählung (CD) umfaßt, das nach dem Empfang eines vom Terminal (TE) übermittelten Befehls ohne oder mit Daten (COM, CDO) aktiviert wird (G1), oder nach einer von der Einheit übermittelten Antwort mit Daten (RDO), die entaktiviert wird (G8), bis ein Befehl mit Daten (CDO) von der Anwendungsschicht (AP) eingeht, oder deutlich bei Übermittlung einer Antwort ohne oder mit Daten (RES, RDO) an das Terminal, und die deutlich bei Ablauf jeder Wartezeit (BWT) entaktiviert und dann reaktiviert wird, was die Übermittlung der Anfrage auf Verlängerung (WTX) an das Terminal (TE) auslöst.

3. Verfahren zum Zeitmanagement in einer Anwendungsschicht (AP), die mit einer Kommunikations-Protokollschicht (PR) in einer Einheit von der Art einer Chipkarte (CP) nach Anspruch 1 oder 2 verbunden ist, **dadurch gekennzeichnet, daß** es die folgenden Schritte umfaßt:
- Stellung eines Zeitdauer-Managers (GD), der eine Schnittstelle mit der Protokollschicht (PR) bildet, die mit der Anwendungsschicht verbunden ist;
- Den Manager (GD) in Antwort (P1, P3) auf einen Befehl ohne oder mit von einem Terminal (TE) übermittelten Daten oder nach einer von der Einheit an das Terminal übermittelten (P5) Antwort mit Daten durch die Protokollschicht aktivieren, so daß deutlich periodisch Anfragen nach Verlängerung der Wartezeit (WTX) erstellt werden, die von der Protokollschicht (PR) an das Terminal (TE) übermittelt werden;
- Den Manager (GD) entaktivieren (G8), wenn die Protokollschicht einen Befehl mit Daten erwartet (P3) oder deutlich, wenn die Protokollschicht eine Antwort ohne oder mit Daten übermittelt (P4, P5).

4. Verfahren nach Anspruch 3, **dadurch gekennzeichnet, daß** der Schritt mit der Aktivierung die folgenden periodischen Schritte umfaßt:
Eine Wartezeit (BWT) mit dem Zeitzählungsmittel (CD) abzählen (G3, G4), das im aktivierten Manager (GD) eingeschlossen ist;
Das Zählmittel entaktivieren (G5) und deutlich bei Ablauf einer Wartezeit (BWT) durch den Manager eine Anfrage nach Verlängerung der Wartezeit (WTX) erstellen (G6);
Die Anfrage nach Verlängerung der Wartezeit (WTX) durch die Protokollschicht an das Terminal (TE) übermitteln (P2) und
das Zählmittel aktivieren (G7).
